# EUROPEAN PATENT SPECIFICATION

(11) **EP 2 157 111 B1**
(45) Date of publication and mention of the grant of the patent: **29.02.2012**
(21) Application number: 09167860.7
(22) Date of filing: 13.08.2009
(51) Int. Cl.: C08G 18/75, C08G 18/08, C08G 18/18, C08G 18/12, C08G 18/66, C08G 18/34, C08G 18/42

(54) **Process for the production of polyurethane urea resin dispersions**
Verfahren zur Herstellung von Polyurethan-Harnstoffharz-Dispersionen
Procédé de fabrication de dispersions de résine de polyuréthane-urée

(30) Priority: 20.08.2008 US 194877
(43) Date of publication of application: 24.02.2010
(73) Proprietor: E. I. du Pont de Nemours and Company, Wilmington, DE 19898 (US)
(72) Inventor: Chilla, Marc, 45549 Sprockhoevel (DE); Goebel, Armin, D-58300 Wetter (DE); Doessel, Karl-Friedrich, 42109 Wuppertal (DE)
(74) Representative: DuPont Performance Coatings Biering/Blum/Kimpel

(56) References cited:
- EP-A- 1 172 389
- EP-A- 1 413 591
- WO-A1-2009/076381
- WO-A1-2009/143433
- FR-A- 2 776 662
- US-A1- 2006 142 475

## Description

### Field of the Invention

The invention relates to a process for the production of polyurethane urea resin dispersions.

### Background of the Invention

A well-known method for the production of aqueous polyurethane urea resin dispersions is the so-called acetone process (see Ullmann's Encyclopedia of Industrial Chemistry, 5th Edition, Vol. A21, pages 678-679): Typically, an NCO-functional hydrophilic polyurethane prepolymer is made by addition reaction of polyols and polyisocyanates in the presence of acetone as diluent. The NCO-functional hydrophilic polyurethane prepolymer may be reacted with a NCO-reactive chain extender like, for example, a polyamine, a hydrazine derivative or water. The acetone solution is converted into an aqueous dispersion by mixing with water. If a chain extension reaction is performed, it may happen before and/or after the conversion into the aqueous dispersion. Finally the acetone is removed to the desired degree, in particular, by distilling it off. The acetone removal step is the weak point of the acetone process because of the formation of waste acetone, consumption of energy and relative poor space-time-yield of the process.

### Summary of the Invention

It has been found that the production of an isocyanate-functional polyurethane prepolymer, which can be converted into an aqueous polyurethane urea resin dispersion, can take place in the presence of a substantially lower amount of ketone solvent than is usually effective, if the polyurethane prepolymer is made up of polyisocyanate, polyol, and polyhydroxycarboxylic acid which has already been neutralized with tertiary amine, and the neutralization of the carboxyl groups provided by the polyhydroxycarboxylic acid does not take place substantially immediately before the conversion of the formed polyurethane prepolymer into the aqueous dispersion, as would be conventional in the prior art. The previously explained distilling off of the ketone solvent can thus be avoided. In the case where a ketone-free aqueous polyurethane urea resin dispersion is desired, the distillation can be carried out with comparatively lower energy and time expenditure and will produce a smaller amount of waste ketone. Of course, as well as there being a comparatively low amount of ketone, it is unnecessary for any other organic solvents to be used.

The present invention provides a process for the production of an aqueous polyurethane urea resin dispersion with a carboxyl number of 10 to 50 mg KOH/g resin solids and a ketone content of 5 to 10 wt.% (weight-%) relative to resin solids, comprising the steps:
1) production of a carboxylate-functional, non-gelled, water-dispersible polyurethane prepolymer with a free isocyanate group content of 1.5 to 3 wt.%, in particular 1.7 to 2.5 wt.%, by reacting at least one polyol, at least one tertiary amine-neutralized polyhydroxycarboxylic acid and at least one polyisocyanate, in the presence of one or more ketones,
2)conversion of the ketone solution of the polyurethane prepolymer into an aqueous dispersion by mixing with water, and
3) chain extension of the polyurethane prepolymer by reacting the free isocyanate groups thereof with water and/or at least one compound having at least two amino groups capable of addition to isocyanate groups to form urea groups,
wherein the proportion of the ketone or ketones used in step 1) is selected in such a way that the aqueous polyurethane urea resin dispersion, obtained after the completion of step 3), contains 5 to 10 wt.% of ketone relative to the resin solids.

### Detailed Description of the Embodiments

The term "resin solids" is used in the description and the claims. It refers to the actual polyurethane urea resin solids of the polyurethane urea resin dispersion, i.e., the solids contribution of the polyurethane urea resin formed in process step 3) without considering the neutralizing tertiary amine.

In the description and the claims the term "content of free isocyanate groups" is used. It is calculated as content of free NCO (molar mass = 42) per 100 g of a material and is expressed in wt.%. In other words, 100 g of the solvent-free isocyanate- and carboxylate-functional polyurethane prepolymer produced in process step 1) (inclusive of the ammonium derived from the neutralizing tertiary amine) contain 1.5 to 3 g NCO.

In process step 1) a carboxylate-functional, non-gelled, water-dispersible polyurethane prepolymer with a free isocyanate group content of 1.5 to 3 wt.% is prepared by reacting at least one polyol, at least one tertiary amine-neutralized polyhydroxycarboxylic acid and at least one polyisocyanate in the presence of one or more ketones.

The at least one polyol used in process step 1) may comprise polyols in the form of low molar mass compounds defined by empirical and structural formula but also oligomeric or polymeric polyols with number-average molar masses of, for example, up to 2,000, in particular, of 500 to 2,000. Examples of oligomeric or polymeric polyols are corresponding hydroxyl-functional polyethers, polyesters or polycarbonates.

All statements made in the present description and the claims in relation to number-average molar masses relate to number-average molar masses determined by GPC (gel permeation chromatography, polystyrene standards, polystyrene gel as stationary phase, tetrahydrofuran as mobile phase).

Examples of low molar mass polyols that may be used in process step 1) are low molar mass diols such as ethylene glycol, the isomeric propane- and butanediols, 1,5-pentanediol, 1,6-hexanediol, 1,10-decanediol, 1,12-dodecanediol, bisphenol A, neopentyl glycol, butylethylpropanediol, the isomeric cyclohexanediols, the isomeric cyclohexanedimethanols, hydrogenated bisphenol A, tricyclodecanedimethanol, and dimer fatty alcohol.

Examples of low molar mass polyols with more than two hydroxyl groups per molecule that may be used in process step 1) are compounds such as glycerol, trimethylolethane and trimethylolpropane.

Examples of oligomeric or polymeric polyols that may be used in process step 1) are oligomeric or polymeric diols such as telechelic (meth)acrylic polymer diols, polyester diols, polyether diols, polycarbonate diols, each with a number-average molar mass of, for example, up to 2,000, in particular, of 500 to 2,000.

Examples of oligomeric or polymeric polyols with a hydroxyl functionality greater than 2 that may be used in process step 1) are corresponding polyester polyols, polyether polyols, polycarbonate polyols, each with a number-average molar mass of, for example, up to 2,000, in particular, of 500 to 2,000.

In step 1) of the process according to the invention, in addition to the at least one polyol, at least one tertiary amine-neutralized polyhydroxycarboxylic acid is reacted with the at least one polyisocyanate. Examples of polyhydroxycarboxylic acids that may be used in process step 1) are polyhydroxymonocarboxylic acids such as dimethylol propionic acid or dimethylol butyric acid and polyhydroxypolycarboxylic acids such as tartaric acid.

It is essential to the invention that right from the beginning of the polyurethane prepolymer synthesis, the at least one polyhydroxycarboxylic acid is used in tertiary amine-neutralized form. The ratio of polyhydroxycarboxylic acid to neutralizing tertiary amine in this case corresponds to a degree of neutralization of, for example, 70 to 100 %, preferably 90 to 100 %. For example, the at least one polyhydroxycarboxylic acid can be neutralized with tertiary amine in the ketone (mixture) or in a part of the ketone (mixture), used as reaction medium, before it is brought into contact, in process step 1), with the at least one polyisocyanate.

Examples of tertiary amines that may be used for neutralizing the at least one polyhydroxycarboxylic acid comprise tertiary amines inert towards isocyanate groups such as triethylamine, N-methylpiperidine, N-methylmorpholine, triisopropylamine and dimethylisopropylamine. Dimethylisopropylamine is especially preferred.

Examples of polyisocyanates that may be used in process step 1) are aliphatic, cycloaliphatic, aromatic or araliphatic diisocyanates such as, for example, 1,6-hexane diisocyanate, isophorone diisocyanate, bis(4-isocyanatocyclohexyl)methane, bis(4-isocyanatophenyl)methane, tetramethylxylylene diisocyanate and 1,4-cyclohexane diisocyanate. Further examples are polyisocyanates having more than two isocyanate groups, such as, trisisocyanatononane and polyisocyanates derived from the diisocyanates mentioned in the preceding sentence, for example, isocyanurate, uretdione or biuret derivatives thereof.

The at least one polyol, the at least one tertiary amine-neutralized polyhydroxycarboxylic acid and the at least one polyisocyanate are selected in such a way, in terms of type and amount, that in process step 1) a carboxylate-functional, non-gelled, water-dispersible polyurethane prepolymer with a free isocyanate group content of 1.5 to 3 wt.% is formed, which is later reacted, in the course of the chain extension, which takes place in process step 3), to form a polyurethane urea resin with a carboxyl number of 10 to 50 mg KOH/g. Process step 1) is thus carried out with an excess of isocyanate and with complete consumption of the hydroxyl groups which are provided by the at least one polyol and the at least one polyhydroxycarboxylic acid; for example, the NCO:OH equivalent ratio employed in process step 1) is 2:1 to 1.1:1, preferably 1.5:1 to 1.1:1.

The sequence of the addition of the at least one polyol, the at least one tertiary amine-neutralized polyhydroxycarboxylic acid and the at least one polyisocyanate is not fixed. For example, the at least one polyisocyanate may initially be reacted with the at least one polyol and subsequently with the at least one tertiary amine-neutralized polyhydroxycarboxylic acid, or vice versa. Preferably, a mixture of the at least one polyol and the at least one tertiary amine-neutralized polyhydroxycarboxylic acid is provided in ketone, and then the at least one polyisocyanate, optionally dissolved in ketone, is added. Conventional catalysts for polyurethane synthesis, such as diorganotin compounds, may be added at any time. The reaction temperature may be limited by the boiling point of the ketone or ketone mixture used as a reaction medium and is generally in the range of 45 to 85 °C. The end of the reaction is reached when an NCO concentration which is not decreasing, or is only decreasing slowly, is achieved. This can be detected analytically, for example, by means of IR-spectroscopy or titration.

As already mentioned, process step 1) takes place in the presence of a ketone or a mixture of a plurality of ketones. The ketones are ketones which are inert towards isocyanate groups. Examples of suitable ketones are methylethyl ketone and acetone. It is preferred to work in the presence of acetone as the only ketone. No further organic solvent, such as, for example, N-methylpyrrolidone, needs to be used in addition to the ketone(s). Rather, it is preferred for no further organic solvents to be added or used apart from the ketone(s); by the way, same is true with regard to process steps 2) and 3). The proportion of the ketone(s) is selected in such a way that the aqueous polyurethane urea resin dispersion, which is obtained after the completion of process step 3), has a ketone content of 5 to 10 wt.% relative to resin solids, without a need for distilling off ketone in order to achieve this low ketone content. In other words, the process according to the invention does not *per se* involve distilling off ketone.

The carboxylate-functional polyurethane prepolymer formed in process step 1) has a free isocyanate group content of 1.5 to 3 wt.% and a carboxyl number of, for example, over 10 to 55 mg KOH/g and is thus water-dispersible. Depending on the selected starting compounds, i.e., depending on the at least one polyol, the at least one polyhydroxycarboxylic acid and the at least one polyisocyanate, the polyurethane prepolymer may be a linear or branched polyurethane, but is in any case a non-gelled polyurethane. The number-average molar mass of the polyurethane prepolymer formed in process step 1) cannot be determined directly by GPC, and therefore the isocyanate groups are initially defunctionalized, for example, by reacting with dibutylamine. The number-average molar mass, which is determined by GPC, of the polyurethane prepolymer which has been NCO-defunctionalized by reacting with dibutylamine is in the range of, for example, 3,000 to 4,000.

In step 2) of the process according to the invention, the nonaqueous, isocyanate- and carboxylate-functional polyurethane prepolymer, which was obtained in process step 1) and is dissolved in ketone, is converted by mixing with water into an aqueous dispersion with a solids content of, for example, 30 to 47 wt.%. Water can be added in this case to the polyurethane prepolymer or vice versa. Generally, the mixing with water takes place at a temperature below 60 °C. At the point of mixing, the temperature of the ketone solution of the polyurethane prepolymer may be, for example, 40 to 60 °C, and that of the water may be, for example, 20 to 40 °C.

In step 3) of the process according to the invention, the chain extension, in which urea groups form and the molar mass increases, of the isocyanate- and carboxylate-functional polyurethane prepolymer, which has been dispersed in water in process step 2), takes place by reacting with water and/or at least one compound with at least two amino groups capable of addition to isocyanate groups. During chain extension the isocyanate groups of the polyurethane prepolymer are completely used up.

Process steps 2) and 3) may have a temporal overlap or take place one after the other. For example, process steps 2) and 3) may in part run simultaneously, the completion of the chain extension reaction occurring after the aqueous dispersion has been formed, i.e., within the dispersion particles which have already formed.

The chain extension of the isocyanate- and carboxylate-functional polyurethane prepolymer dispersed in water can be carried out using water as the chain extender. In the case of water, chain extension proceeds by hydrolysis of isocyanate groups of the isocyanate- and carboxylate-functional polyurethane prepolymer to NH₂ groups and the spontaneous addition thereof to as yet unhydrolyzed isocyanate groups and formation of urea groups. In the case where water is the only chain extender, it is sufficient to carry out the mixing with water according to process step 2) and to wait for the hydrolysis, which proceeds in accordance with process step 3), of isocyanate groups to form amino groups, and the addition thereof to isocyanate groups to form urea groups. For this purpose the aqueous dispersion formed in process step 2) is stirred, for example, at temperatures of 30 to 80 °C, until no more free isocyanate can be detected.

However, the chain extension can also be carried out by reacting one or more compounds, having at least two amino groups capable of addition to isocyanate groups, with the isocyanate-functional polyurethane prepolymer dispersed in water. Examples of compounds of this type are hydrazine and hydrazine derivatives, such as phenylhydrazine, as well as appropriate polyamines, such as ethylenediamine, 1,4-diaminobutane, 1,6-diaminohexane, diethylenetriamine and triethylenetetramine. The reactivity of the isocyanate groups of the isocyanate- and carboxylate-functional polyurethane prepolymer is generally considerably greater towards the amino groups of the compound(s) having at least two amino groups capable of addition to isocyanate groups than towards water. Despite the presence of water, the chain extension in this case will take place initially or substantially by formation of urea groups by way of addition reaction between the isocyanate groups of the polyurethane prepolymer and the amino groups of the at least one compound having at least two amino groups capable of addition to isocyanate groups.

If one or more compounds, having at least two amino groups capable of addition to isocyanate groups, are used as chain extenders, then these are preferably added as an aqueous solution to the aqueous dispersion of the isocyanate- and carboxylate-functional polyurethane prepolymer. This addition preferably takes place without a significant time-delay after the end of the dispersion formation in process step 2), for example, immediately or within less than 30 minutes after the end of process step 2).

As already mentioned, process step 3) may be carried out (i) with water as the only chain extender, or (ii) with a combination of water, as one chain extender, and at least one compound, having at least two amino groups capable of addition to isocyanate groups, as a further chain extender, or (iii) with the at least one compound, having at least two amino groups capable of addition to isocyanate groups, as chain extender, and in the presence of water but without said water taking a substantial part in the chain extension. In the last of these cases, (iii), it is preferred to work with a calculated NCO:(NH + NH₂) equivalent ratio of 0.9:1 to 1.2:1, especially preferably corresponding to the stoichiometric ratio of 1:1.

The process according to the invention may be carried out discontinuously as a batch process or continuously. Examples of continuous processes are processes in which process steps 2) and/or 3) are carried out using a dispersion device, for example, a rotor-stator unit. In this case, the substances to be mixed are brought into contact with one another as separate substance flows. In the example of process step 2), this means that the ketone solution of the polyurethane prepolymer and the water are introduced as separate substance flows into the dispersion device, mixed with one another therein, and dispersed, and leave said device again as an aqueous dispersion. This is similar in the example of process step 3); in the case where at least one compound, having at least two amino groups capable of addition to isocyanate groups, is used as chain extender, the aqueous dispersion obtained in process step 2) and the at least one compound, having at least two amino groups capable of addition to isocyanate groups, are introduced into the dispersion device as separate substance flows, wherein the at least one compound, having at least two amino groups capable of addition to isocyanate groups, may take the form of an aqueous solution, for example.

An aqueous polyurethane urea resin dispersion with a carboxyl number of 10 to 50 mg KOH/g resin solids and a ketone content of 5 to 10 wt.% relative to resin solids is obtained as the product of the process according to the invention. Its resin solids content may be adjusted by addition of water and it lies in the range of, for example, 30 to 47 wt.%. Preferably, the polyurethane urea resin dispersions prepared by the process of the present invention do not contain organic solvents apart from the ketone(s) contained in a proportion of 5 to 10 wt.% relative to resin solids. Such aqueous polyurethane urea resin dispersions may be used in various industrial fields, among others, for example, in adhesives, inks, coatings and impregnating agents. They are predominantly used as binders.

The process of the present invention comprises the already described process steps 1) to 3). Generally there are no further process steps and the process according to the invention consists of process steps 1) to 3) and does not comprise removal of ketone solvent. However, if a solvent-free polyurethane urea resin dispersion, or a polyurethane urea resin dispersion with a lower ketone content, i.e., a ketone content of less than 5 to 10 wt.% relative to resin solids, is desired, then the ketone solvent can be removed, in particular by distillation or vacuum distillation, until the desired ketone content is achieved. In this respect, the process according to the invention may comprise a further process step 4) of partial or complete removal of the ketone solvent.

The following examples illustrate the invention.

### Examples

### Comparative Example 1 (Preparation of an aqueous polyurethane urea resin dispersion):

24.08 pbw (parts by weight) of a polyesterdiol having a hydroxyl value of 112 mg of KOH/g (produced from hexanediol and a 2:1 molar mixture of adipic acid and isophthalic acid) and 1.32 pbw of dimethylolpropionic acid were mixed with 11.6 pbw of acetone in a reaction vessel equipped with stirrer and reflux condenser. 0.004 wt.% of dibutyltin dilaurate catalyst, relative to the polyesterdiol, were added. After heating the mixture to 50 °C 9.45 pbw of isophorone diisocyanate were added and the mixture was stirred at 50 °C until a constant NCO value was obtained. 0.88 pbw of dimethylisopropylamine were then added and the mixture was stirred at 50 °C until homogeneous. 54.79 pbw of deionized water were then added to form an aqueous dispersion, after which 6.48 pbw of a 6.25 wt.% aqueous solution of ethylenediamine were added at 40 °C. The temperature was then raised back up to 50 °C and this temperature was maintained for 2 hours. The reflux condenser was then replaced by a distillation bridge and the acetone was removed by distillation down to a residual acetone content of 3 wt.%. Any water entrained during distillation was replaced by establishing a resin solids content of 35 wt.% in the resultant polyurethane urea resin dispersion.

### Comparative Example 2:

24.08 pbw of the polyesterdiol used in Comparative Example 1 and 1.32 pbw of dimethylolpropionic acid were mixed with 3 pbw of acetone in a reaction vessel equipped with stirrer and reflux condenser. 0.004 wt.% of dibutyltin dilaurate catalyst, relative to the polyesterdiol, were added. After heating the mixture to 50 °C 9.45 pbw of isophorone diisocyanate were added and the mixture was stirred at 50 °C. During the reaction there was a huge increase in viscosity and stirring of the contents of the reaction vessel was no longer possible. Therefore the synthesis was terminated.

### Example 3 according to the invention (Preparation of an aqueous polyurethane urea resin dispersion):

24.08 pbw of the polyesterdiol used in Comparative Example 1, 1.32 pbw of dimethylolpropionic acid and 0.88 pbw of dimethylisopropylamine were mixed with 3 pbw of acetone in a reaction vessel equipped with stirrer and reflux condenser. 0.004 wt.% of dibutyltin dilaurate catalyst, relative to the polyesterdiol, were added. After heating the mixture to 50 °C 9.45 pbw of isophorone diisocyanate were added and the mixture was stirred at 50 °C until a constant NCO value was obtained. 54.79 pbw of deionized water were then added to form an aqueous dispersion, after which 6.48 pbw of a 6.25 wt.% aqueous solution of ethylenediamine were added at 40 °C. The temperature was then raised back up to 50 °C and this temperature was maintained for 2 hours. After cooling an aqueous polyurethane urea resin dispersion with 35 wt.% resin solids was obtained.

### Example 4 (Defunctionalization of an NCO-functional polyurethane prepolymer not inventive):

24.08 pbw of the polyesterdiol used in Comparative Example 1, 1.32 pbw of dimethylolpropionic acid and 0.88 pbw of dimethylisopropylamine were mixed with 3 pbw of acetone in a reaction vessel equipped with stirrer and reflux condenser. 0.004 wt.% of dibutyltin dilaurate catalyst, relative to the polyesterdiol, were added. After heating the mixture to 50 °C 9.45 pbw of isophorone diisocyanate were added and the mixture was stirred at 50 °C until a constant NCO value was obtained. Dibutylamine was added in 10% molar excess relative to NCO in order to defunctionalize the NCO groups.

The NCO-defunctionalized polyurethane prepolymer exhibited a number-average molar mass of 3,800 (determined by GPC).

## Claims

1. A process for the production of an aqueous polyurethane urea resin dispersion with a carboxyl number of 10 to 50 mg KOH/g resin solids and a ketone content of 5 to 10 wt.% relative to resin solids, consisting of the steps:
1) producing a carboxylate-functional, non-gelled, water-dispersible polyurethane prepolymer with a free isocyanate group content of 1.7 to 2.5 wt.% by reacting at least one polyol, at least one tertiary amine-neutralized polyhydroxycarboxylic acid and at least one polyisocyanate, in the presence of at least one ketone,
2) converting the ketone solution of the polyurethane prepolymer into an aqueous dispersion by mixing with water, and
3) chain extending the polyurethane prepolymer by reacting the free isocyanate groups thereof with water and/or at least one compound, having at least two amino groups capable of addition to isocyanate groups, to form urea groups,
wherein the proportion of the ketone or ketones used in step 1) is selected in such a way that the aqueous polyurethane urea resin dispersion, obtained after the completion of step 3), contains 5 to 10 wt.% of ketone relative to the resin solids.

2. The process of claim 1 comprising a further process step 4) of partial or complete removal of the ketone solvent.

3. The process of claim 1 or 2, wherein the ratio of polyhydroxycarboxylic acid to neutralizing tertiary amine corresponds to a degree of neutralization of 70 to 100 %.

4. The process of any one of the preceding claims, wherein the neutralizing tertiary amine is dimethylisopropylamine.

5. The process of any one of the preceding claims, wherein the NCO:OH equivalent ratio employed in process step 1) is 2:1 to 1.1:1.

6. The process of any one of the preceding claims, wherein the at least one ketone is selected from the group consisting of methylethyl ketone and acetone.

7. The process of any one of the preceding claims taking place without addition or use of further organic solvents apart from the at least one ketone.

## Patentansprüche

1. Verfahren zur Herstellung einer wässrigen Polyurethan-Harnstoffharz-Dispersion mit einer Carboxylzahl von 10 bis 50 mg KOH/g Harzfeststoffe und einem Ketongehalt von 5 bis 10 Gew.-%, auf die Harzfeststoffe bezogen, bestehend aus den Schritten:
1) des Herstellens eines carboxylatfunktionellen, keiner Gelbildung unterzogenen, wasserdispergierbaren Polyurethanprepolymers mit einem Gehalt an freien Isocyanatgruppen von 1,7 bis 2,5 Gew.-% durch Reagieren mindestens eines Polyols, mindestens einer mit tertiärem Amin neutralisierten Polyhydroxycarbonsäure und mindestens einem Polyisocyanat in Gegenwart mindestens eines Ketons,
2) des Umwandelns der Ketonlösung des Polyurethanprepolymers in eine wässrige Dispersion durch Mischen mit Wasser und
3) des Kettenverlängerns des Polyurethanprepolymers durch Reagieren der freien Isocyanatgruppen davon mit Wasser und/oder mindestens einer Verbindung, die mindestens zwei Aminogruppen aufweist, die der Addition an Isocyanatgruppen fähig sind, um Harnstoffgruppen zu bilden,
wobei der Anteil des/der in Schritt 1 verwendeten Ketons/Ketone derart ausgewählt wird, dass die wässrige Polyurethan-Harnstoffharz-Dispersion, die nach Abschluss von Schritt 3) erhalten wird, 5 bis 10 Gew.-% Keton, auf die Harzfeststoffe bezogen, enthält.

2. Verfahren nach Anspruch 1, umfassend einen weiteren Verfahrensschritt 4) des teilweisen oder vollständigen Entfernens des Ketonlösungsmittels.

3. Verfahren nach Anspruch 1 oder 2, wobei das Verhältnis von Polyhydroxycarbonsäure zu neutralisierendem tertiärem Amin einem Neutralisationsgrad von 70 bis 100 % entspricht.

4. Verfahren nach einem der vorhergehenden Ansprüche, wobei das neutralisierende tertiäre Amin Dimethylisopropylamin ist.

5. Verfahren nach einem der vorhergehenden Ansprüche, wobei das NCO:OH-Äquivalenzverhältnis, das in Verfahrensschritt 1) angewendet wird, 2:1 bis 1,1:1 beträgt.

6. Verfahren nach einem der vorhergehenden Ansprüche, wobei das mindestens eine Keton aus der Gruppe ausgewählt wird bestehend aus Methylethylketon und Aceton.

7. Verfahren nach einem der vorhergehenden Ansprüche, das ohne Hinzusetzen oder Verwendung weiterer organischer Lösungsmittel außer dem mindestens einen Keton stattfindet.

## Revendications

1. Procédé de production d'une dispersion aqueuse de résine type polyuréthane urée avec un indice de groupes carboxyle de 10 à 50 mg KOH/g de matières solides de type résine et une teneur en cétone de 5 à 10 % en pds par rapport aux matières solides de type résine, constitué des étapes:
1) production d'un prépolymère de polyuréthane à fonctionnalité carboxylate, non gélifié, dispersible dans l'eau avec une teneur en groupes isocyanate libres de 1,7 à 2,5 % en pds par la réaction d'au moins un polyol, d'au moins un poly(acide hydroxycarboxylique) neutralisé par une amine tertiaire et au moins un polyisocyanate, en la présence d'au moins une cétone,
2) conversion de la solution cétone du prépolymère de polyuréthane en une dispersion aqueuse par mélange avec de l'eau, et
3) extension de chaîne du prépolymère de polyuréthane par la réaction de ses groupes isocyanate libres avec de l'eau et/ou d'au moins un composé, ayant au moins deux groupes amino capables d'addition aux groupes isocyanate, pour former des groupes urée,
dans lequel la proportion de la cétone ou des cétones utilisée(s) dans l'étape 1) est choisie d'une manière telle que la dispersion aqueuse de résine type polyuréthane urée, obtenue après l'achèvement de l'étape 3), contient 5 à 10 % en pds de cétone par rapport aux matières solides de type résine.

2. Procédé selon la revendication 1, comprenant une étape de procédé 4) supplémentaire d'élimination partielle ou totale du solvant cétone.

3. Procédé selon la revendication 1 ou 2, le rapport du poly(acide hydroxycarboxylique) à l'amine tertiaire de neutralisation correspondant à un degré de neutralisation de 70 à 100 %.

4. Procédé selon l'une quelconque des revendications précédentes, l'amine tertiaire de neutralisation étant la diméthylisopropylamine.

5. Procédé selon l'une quelconque des revendications précédentes, le rapport des équivalents NCO:OH utilisé dans l'étape de procédé 1) étant de 2:1 à 1,1:1.

6. Procédé selon l'une quelconque des revendications précédentes, la au moins une cétone étant choisie parmi le groupe constitué de la méthyléthyl cétone et de l'acétone.

7. Procédé selon l'une quelconque des revendications précédentes ayant lieu sans addition ni utilisation de solvants organiques supplémentaires à part la au moins une cétone.
